# EUROPEAN PATENT APPLICATION

(11) **EP 4 317 066 A1**
(43) Date of publication of application: **07.02.2024**
(21) Application number: 22779740.4
(22) Date of filing: 28.02.2022
(51) Int. Cl.: C01B 33/18, C03B 20/00, C03B 37/018, C03C 3/06, G02B 6/02

(54) **FLUORINE-CONTAINING SILICA GLASS POWDER AND METHOD FOR PRODUCING FLUORINE-CONTAINING SILICA GLASS POWDER**

(30) Priority: 31.03.2021 JP 2021061489; 31.03.2021 JP 2021061402; 31.03.2021 JP 2021061583; 31.03.2021 JP 2021061701
(71) Applicant: Mitsubishi Chemical Corporation, Chiyoda-ku Tokyo 100-8251 (JP)
(72) Inventor: SHIMO, Isao, Tokyo 100-8251 (JP); WATANABE, Hiromu, Tokyo 100-8251 (JP)
(74) Representative: Vossius & Partner Patentanwälte Rechtsanwälte mbB
(86) International application number: PCT/JP2022/008306
(87) International publication number: WO 2022/209515

(57) **Abstract**

Provided is a fluorine-containing synthetic silica glass powder which contains a sufficient amount of fluorine, and in which a reduction in the fluorine concentration caused by dissociation of fluorine from silica can be inhibited. Problems are solved by a fluorine-containing silica glass powder which contains particles having a particle size of more than 150 µm but 300 µm or less in an amount of 25% by weight or more as a whole. Also provided as a method of producing the glass powder is, for example, a method of producing a fluorine-containing silica glass powder, which method includes: prefiring a silicon oxide at a temperature of lower than 1,000°C in the presence of SiF₄ to prepare a fluorine-containing silica; and subsequently firing the fluorine-containing silica at a temperature of 1,000°C or higher but lower than 1,400°C to produce a silica glass powder.

## Description

### TECHNICAL FIELD

The present invention relates to: a synthetic silica glass powder suitable for a cladding or overcladding of an optical fiber; and a method of producing the same.

### BACKGROUND ART

In the fields of optical communication, optical semiconductors, and the like, silica glass optical members such as optical fibers are often used. In order to reduce a loss of light of optical fibers, a silica glass having a low refractive index is required.

Specifically, in the production of an optical fiber, a layer of a fluorine-containing silica glass is arranged as a cladding and/or an overcladding to cover the circumference of a core, and the use of a silica glass having a low refractive index as the cladding enables to use a germanium-undoped or low-germanium-doped silica glass as the core, as a result of which a loss of light caused by Rayleigh scattering of the core can be inhibited. In addition, by using a silica glass having a low refractive index to form an appropriate refractive index distribution, a loss of light at the time of bending the optical fiber can be reduced. Further, by using a silica glass having a low refractive index to form an appropriate refractive index distribution, crosstalk in a multi-core fiber can be reduced.

In order to obtain a silica glass having a low refractive index, it is known to dope a silica glass with boron or fluorine, and the methods disclosed in Patent Documents 1 and 2 are known as methods of producing a fluorine-doped silica glass.

Patent Document 1 discloses a method of producing a doped silica glass by preparing a dispersion in a liquid containing silica particles and a doping agent, treating a precipitate thereof with a gas containing a fluorine source, and subsequently firing the resultant. Patent Document 2 discloses a method of producing a doped silica glass by heating a silica glass containing a dopant element by way of irradiation with electromagnetic waves.

### RELATED ART DOCUMENTS

### PATENT DOCUMENTS

[Patent Document 1] Japanese Unexamined Patent Application Publication (Translation of PCT Application) No. 2016-519641
[Patent Document 2] Japanese Unexamined Patent Application Publication No. 2006-021952

### SUMMARY OF THE INVENTION

### PROBLEMS TO BE SOLVED BY THE INVENTION

As described above, methods of producing a fluorine-doped silica glass have been proposed; however, it has not been adequately elucidated as to what kind of measures should be implemented in order to dope a sufficient amount of fluorine in the production process of a fluorine-doped silica powder.

More specifically, it is important that fluorine be stably retained in the silica of the resulting fluorine-doped silica powder. Thus, it is believed advantageous to, for example, reduce the particle size of the silica from the standpoint of increasing the surface area for doping fluorine and allowing fluorine to permeate through the silica surface and be retained inside. On the other hand, in the glass production in which fluorine exists in a shallow portion from the silica surface, it is also thought that, when the silica powder is treated, or melted to obtain a silica glass having a desired refractive index, fluorine does not remain in the silica glass and a desired fluorine amount may not be obtained, and preferred conditions are hardly known.

### MEANS FOR SOLVING THE PROBLEMS

Under the above-described circumstances, the present inventors examined what needs to be done in order to dope fluorine in an amount sufficient for making a difference in the refractive index as required for practical use. As a result, the present inventors discovered that a fluorine-containing silica glass powder which contains a sufficient amount of fluorine, and in which a reduction in the fluorine concentration caused by dissociation of fluorine from a fluorine-containing silica powder can be inhibited, can be provided when the particle size of a silica powder used as a raw material is in an appropriate range, thereby arriving at the present invention.

A first aspect of the present invention encompasses the following:
[1] A fluorine-containing silica glass powder, which is a synthetic silica glass powder containing fluorine, and contains particles having a particle size of more than 150 µm but 300 µm or less in an amount of 25% by weight or more as a whole.
[2] The fluorine-containing silica glass powder according to [1], wherein the fluorine content is 0.1% by weight or more.
[3] The fluorine-containing silica glass powder according to [1] or [2], wherein the content of metal impurities is 1,000 ppm or less.
[4] The fluorine-containing silica glass powder according to any one of [1] to [3], containing the particles having a particle size of more than 150 µm but 300 µm or less in an amount of 50% by weight or more as a whole.
[5] The fluorine-containing silica glass powder according to any one of [1] to [4], containing particles having a particle size of more than 425 µm in an amount of 1% by weight or less as a whole.
[6] The fluorine-containing silica glass powder according to any one of [1] to [5], containing particles having a particle size of 75 µm or less in an amount of 1% by weight or less as a whole.
[7] A method of producing an optical fiber, the method including the step of forming a cladding or overcladding using the fluorine-containing silica glass powder according to any one of [1] to [6].
[8] A method of producing a jacket tube, the method including the step of forming a jacket tube using the fluorine-containing silica glass powder according to any one of [1] to [6].
[9] A method of producing a substrate tube, the method including the step of forming a substrate tube using the fluorine-containing silica glass powder according to any one of [1] to [6].
[10] A method of producing an overcladding tube, the method including the step of forming an overcladding tube using the fluorine-containing silica glass powder according to any one of [1] to [6] .

Further, under the above-described circumstances, the present inventors examined what needs to be done in order to dope fluorine in an amount sufficient for making a difference in the refractive index. As a result, the present inventors discovered that the use of SiF₄ as a fluorine raw material enables to provide a fluorine-containing silica glass powder which contains a sufficient amount of fluorine and in which a reduction in the fluorine concentration caused by dissociation of fluorine from the fluorine-containing silica glass powder can be inhibited, thereby arriving at the present invention.

A second aspect of the present invention encompasses the following:
[11] A method of producing a fluorine-containing silica glass powder, the method including:
   prefiring a silicon oxide at a temperature of lower than 1,000°C in the presence of SiF₄ to prepare a fluorine-containing silica; and
   subsequently firing the fluorine-containing silica at a temperature of 1,000°C or higher but lower than 1,400°C to produce a silica glass powder.
[12] The method of producing a fluorine-containing silica glass powder according to [11], wherein the prefiring in the presence of SiF₄ is performed at 100°C to 800°C.
[13] The method of producing a fluorine-containing silica glass powder according to [11] or [12], further including, after the prefiring, performing annealing at 200°C or higher but lower than 1,000°C.
[14] The method of producing a fluorine-containing silica glass powder according to any one of [11] to [13], wherein the prefiring includes: the step of heating the silicon oxide to 200°C to 800°C before introducing SiF₄; and the step of subsequently introducing a SiF₄-containing gas at 100°C to 800°C.
[15] The method of producing a fluorine-containing silica glass powder according to any one of [11] to [14], wherein a particle size is 1 mm or less.
[16] A fluorine-containing silica glass powder, having a fluorine content of 2% by weight or more.
[17] A method of producing an optical fiber, the method including the step of melting and drawing a fluorine-containing silica glass powder obtained by the method according to any one of [11] to [15].
[18] A method of producing a jacket tube, the method including the step of forming a jacket tube using the fluorine-containing silica glass powder according to any one of [11] to [15].
[19] A method of producing a substrate tube, the method including the step of forming a substrate tube using the fluorine-containing silica glass powder according to any one of [11] to [15].
[20] A method of producing an overcladding tube, the method including the step of forming an overcladding tube using the fluorine-containing silica glass powder according to any one of [11] to [15].

Still further, under the above-described circumstances, the present inventors examined what needs to be done in order to dope fluorine in such an amount that makes a sufficient difference in the refractive index. As a result, the present inventors discovered that a fluorine-containing silica glass powder having a sufficient fluorine concentration can be obtained by allowing a specific substance to exist at the time of prefiring; and that, by using this fluorine-containing silica glass powder, the energy efficiency in the production of a fluorine-containing silica glass as a bulk can be improved. The present inventors also discovered that this production method can provide a fluorine-containing synthetic silica glass powder which has a sufficient fluorine concentration and in which a reduction in the fluorine concentration caused by dissociation of fluorine from the fluorine-containing silica glass powder can be inhibited, thereby arriving at the present invention.

A third aspect of the present invention encompasses the following:
[21] A method of producing a fluorine-containing silica glass powder, the method including:
   the first step' of prefiring a silicon oxide at a temperature of 750°C or lower in the presence of an ammonium fluoride to obtain a fluorine-containing silica; and
   the second step' of firing the thus obtained fluorine-containing silica at 1,000°C or higher but lower than 1,400°C to obtain a silica glass powder.
[22] The method of producing a fluorine-containing silica glass powder according to [21], wherein the resulting fluorine-containing silica glass powder has a particle size of 1 mm or less.
[23] The method of producing a fluorine-containing silica glass powder according to [21] or [22], wherein, in the first step', the silicon oxide and an ammonium fluoride powder are mixed and prefired.
[24] The method of producing a fluorine-containing silica glass powder according to any one of [21] to [23], wherein the silicon oxide is produced by a sol-gel method.
[25] The method of producing a fluorine-containing silica glass powder according to any one of [21] to [24], wherein, in the first step', the temperature of the prefiring is 250°C to 750°C.
[26] A method of producing an optical fiber, the method including the step of melting and drawing a fluorine-containing silica glass powder obtained by the method according to any one of [21] to [25].
[27] A method of producing a substrate tube, the method including the step of forming a substrate tube using a fluorine-containing silica glass powder obtained by the method according to any one of [21] to [25].
[28] A method of producing an overcladding tube, the method including the step of forming an overcladding tube using a fluorine-containing silica glass powder produced by the method according to any one of [21] to [25].

Yet still further, under the above-described circumstances, the present inventors examined what needs to be done in order to dope fluorine in an amount sufficient for making a difference in the refractive index as required for practical use. As a result, the present inventors discovered that, by using a silicon oxide as a raw material, prefiring the silicon oxide in the coexistence of a fluorocarbon, subsequently annealing the resultant, and then performing firing at a specific temperature or higher, a fluorine-containing silica glass powder which contains a sufficient amount of fluorine, and in which a reduction in the fluorine concentration caused by dissociation of fluorine from the fluorine-containing silica glass powder can be inhibited, can be provided, thereby arriving at the present invention.

A fourth aspect of the present invention encompasses the following:
[29] A method of producing a fluorine-containing silica glass powder, the method including:
   the first step'' of prefiring a silicon oxide at a temperature of 850°C or lower in the presence of a fluorocarbon to obtain a fluorine-containing silica; and
   the second step'' of annealing the thus obtained fluorine-containing silica at a temperature of not higher than a firing temperature and subsequently firing the resultant at 1,000°C or higher to obtain a silica glass powder,
   wherein the temperature does not exceed 850°C before the prefiring performed in the presence of a fluorocarbon.
[30] The method of producing a fluorine-containing silica glass powder according to [29], wherein, in the first step'', the temperature of the prefiring performed in the presence of a fluorocarbon is 700°C or higher.
[31] The method of producing a fluorine-containing silica glass powder according to [29] or [30], wherein the resulting fluorine-containing silica glass powder has a particle size of 1 mm or less.
[32] The method of producing a fluorine-containing silica glass powder according to any one of [29] to [31], wherein, in the first step'', the fluorocarbon is allowed to exist in the middle of the prefiring.
[33] The method of producing a fluorine-containing silica glass powder according to any one of [29] to [32], wherein the fluorocarbon is a perfluoro-based fluorocarbon.
[34] A method of producing a jacket tube, the method including the step of forming a jacket tube using a fluorine-containing silica glass powder produced by the method according to any one of [29] to [33].
[35] A method of producing a substrate tube, the method including the step of forming a substrate tube using a fluorine-containing silica glass powder produced by the method according to any one of [29] to [33].
[36] A method of producing an overcladding tube, the method including the step of forming an overcladding tube using a fluorine-containing silica glass powder produced by the method according to any one of [29] to [33].

### EFFECTS OF THE INVENTION

According to the present invention, a fluorine-containing silica glass powder which contains a sufficient amount of fluorine, and in which a reduction in the fluorine concentration caused by dissociation of fluorine can be inhibited, can be provided.

In addition, according to the present invention, a production method which can improve the energy efficiency during production can be provided. Further, this production method can provide a fluorine-containing silica glass powder which contains a sufficient amount of fluorine and can be easily mass-produced industrially, and in which a reduction in the fluorine concentration caused by dissociation of fluorine can be inhibited.

### MODE FOR CARRYING OUT THE INVENTION

The present invention will now be described in detail; however, the following descriptions of requirements are merely examples (representative examples) of embodiments of the present invention, and the present invention is not limited to the contents thereof, and can be carried out with various modifications within the scope of the gist of present invention.

### <First Aspect>

One embodiment (first aspect) of the present invention is a fluorine-containing synthetic silica glass powder which contains particles having a particle size of more than 150 µm but 300 µm or less in an amount of 25% by weight or more as a whole.

Particles having a particle size of 150 µm or more refer to those particles that, when shaken for 10 minutes on a sieve having a nominal mesh size of 150 µm in accordance with JIS Test Sieves of Metal Wire Cloth (JIS Z8801-1:2006), remain on the sieve, while particles having a particle size of 300 µm or less refer to those particles that, when shaken on a sieve having a nominal mesh size of 300 µm in accordance with JIS Test Sieves of Metal Wire Cloth, passes through the sieve.

Methods of doping fluorine into a synthetic silica glass are proposed in Patent Documents 1 and 2 and the like; however, these methods are not for the production of a powder and, in these methods, not only the production of a powder but also the inhibition of a reduction in the fluorine concentration caused by dissociation of fluorine during the production of a powder are not sufficiently examined. Under such circumstances, the present inventors discovered that a silica powder having a particle size in an appropriate range can yield a fluorine-containing synthetic silica glass powder which contains a sufficient amount of fluorine, and in which a reduction in the fluorine concentration caused by dissociation of fluorine can be inhibited.

From the standpoint of fluorine content and retention of fluorine in the fluorine-containing silica glass powder, the content of the particles having a particle size of more than 150 µm but 300 µm or less is preferably 30% by weight or more, more preferably 35% by weight or more, still more preferably 40% by weight or more, most preferably 50% or more, of the whole fluorine-containing silica glass powder. An upper limit thereof is not particularly limited, and may be 100% by weight, or 95% by weight or less.

Further, the content of particles having a particle size of more than 150 µm but 212 µm or less is preferably 25% by weight or more, more preferably 30% by weight or more, of the whole fluorine-containing silica glass powder. An upper limit thereof is not particularly limited, and may be 100% by weight, or 95% by weight or less.

Particles having a relatively small particle size, specifically particles having a particle size of 75 µm or less, have a large surface area for their volume and are thus advantageous in terms of reaction with a fluorine source, and such particles yield a fluorine-containing silica powder apparently having a high fluorine content ratio at the time of being fluorinated; however, when the temperature is actually elevated in a firing stage or for molding the powder as a glass, fluorine is likely to be dissociated from the surface of the powder, causing a reduction in the fluorine content ratio after the production of a glass article. The content of the particles having a particle size of 75 µm or less is preferably 1% by weight or less of the whole fluorine-containing silica glass powder.

Moreover, particles having a large particle size, specifically particles having a particle size of more than 425 um, require an extended heating time when they are actually fired or molded as a glass, and this makes dissociation of fluorine likely to occur. The content of the particles having a particle size of more than 425 µm is preferably 1% by weight or less of the whole fluorine-containing silica glass powder.

The ratio of the particles having a particle size of more than 150 µm but 300 µm or less and that of the particles having a particle size of more than 150 µ but 212 µm or less with respect to the whole fluorine-containing silica glass powder can be calculated based on sieving of the silica powder.

The "particles having a particle size of more than 150 µm but 212 µm or less" means particles that pass through a stainless steel mesh having a nominal mesh size of 212 µm but do not pass through a stainless steel mesh having a nominal mesh size of 150 um. The mesh size of these sieves used for measurement is prescribed in JIS Z8801-1:2006, and sieves each having a nominal mesh size of 300 µm, 212 um, or 150 µm may be used. The sieving is performed for 10 minutes.

The fluorine-containing silica glass powder of the present embodiment can contain fluorine at a high concentration, and the fluorine concentration is usually 0.05% by weight or higher, preferably 0.1% by weight or higher, more preferably 0.3% by weight or higher, and still more preferably 0.5% by weight or higher. An upper limit thereof is not limited; however, it is usually 40% by weight or lower, and may be 10% by weight or lower.

The fluorine-containing silica glass powder may contain metal impurities, and the content thereof is preferably 1,000 ppm or less, more preferably 500 ppm or less, and still more preferably 100 ppm or less. By controlling the concentration of the metal impurities to be low, a loss of light can be inhibited when the fluorine-containing silica glass powder is used as a cladding or overcladding of an optical fiber. Typical examples of the metal impurities include transition metals, more specifically copper, iron, and chromium. Alkaline earth metals, alkali metals, and the like modify the physical properties such as melt viscosity, and catalyze the crystallization of silica glass to cause devitrification; therefore, the concentration thereof is preferably reduced. As a means for reducing the concentration of these metal impurities, any method known as a method of producing a conventional synthetic silica glass powder not doped with fluorine can be applied.

The fluorine concentration in the fluorine-containing silica glass powder can be quantified by ion chromatography of an aqueous solution obtained by melting the fluorine-containing silica glass powder with an alkali and dissolving the resultant in water. Further, the concentration of the metal impurities can be quantified by an ICP-MS measurement of a sample obtained by heat-dissolving the fluorine-containing silica glass powder in a mixed acid of hydrofluoric acid and sulfuric acid, further heating and evaporating the resulting mixture until sulfuric acid droplets remain, and then dissolving the resultant in pure water.

The specific surface area of the fluorine-containing silica glass powder is not particularly limited; however, it is usually 0.001 m²/g or more, preferably 0.01 m²/g or more, but usually 1 m²/g or less, preferably 0.3 m²/g or less.

A method of producing the fluorine-containing silica glass powder is not particularly limited; however, it will now be described taking a sol-gel method as an example.

As one example of a sol-gel method, an alkoxysilane and pure water are added to a reactor each in an amount of 1 to 10 equivalents to perform a sol-gel reaction, and the resultant is subsequently pulverized and dried to obtain a dry gel as a silica precursor. A silica powder can be obtained by firing the thus obtained dry gel at a temperature of about 400°C to 1,400°C. By supplying a material serving as a fluorine source during this firing, a fluorine-containing silica glass powder can be obtained. Specific examples of the fluorine source include C₂F₆, and a fluorine-containing silica glass powder can be obtained by performing a fluorination treatment at a temperature of 700°C to 1,200°C with circulation of a mixed gas of C₂F₆ and O₂, subsequently performing annealing as required, and then firing the resultant.

By using SiF₄ as the fluorine source, a fluorine-containing silica powder having a very high fluorine content, specifically a fluorine-containing silica powder having a fluorine concentration of about 10% by weight, can be easily obtained.

Further, when NH₄F is used as the fluorine source, a fluorine-containing silica powder having a sufficiently high fluorine content ratio can be obtained at a relatively low temperature.

The fluorine-containing silica glass powder of the present embodiment obtained in this manner has a low refractive index and thus can be preferably used as a material of a cladding or overcladding of an optical fiber. It is noted here that the fluorine-containing silica glass powder of the present embodiment can also be used as an optical member other than a cladding or overcladding of an optical fiber.

A method of producing an optical fiber, which method includes the step of forming an overcladding using the fluorine-containing silica glass powder of the present embodiment, will now be described.

In one example, a primary preform (core rod) made of glass is arranged in an overcladding tube, and the space between the primary preform and the overcladding tube is filled with the fluorine-containing synthetic silica glass powder. Subsequently, the overcladding tube filled with the silica glass powder is placed in a furnace, and the glass (tube and silica glass powder) is softened and drawn, whereby an optical fiber can be produced. Alternatively, an optical fiber may be produced from a secondary preform obtained by once melt-vitrifying the overcladding tube filled with the silica glass powder, without direct drawing. As the overcladding tube, a tube made of a silica glass, or a tube produced by using the fluorine-containing silica glass powder of the present invention as a raw material can be used, or a commercially available product may be used as well. The temperature of the furnace used for softening the glass can be set as appropriate by a person of ordinary skill in the art, and may be, for example, 2,000°C to 2,500°C. A method of producing an optical fiber is not limited to the above-described method, and an optical fiber may be produced by any known method.

The fluorine-containing silica glass powder of the present embodiment can also be used as a raw material of a jacket tube (hereinafter, may be also referred to as "tube" or "cylinder") in the production of a cladding part by a jacket method (sleeving method), or as a raw material of a substrate tube on which soot is deposited in an MCVD method or the like.

### <Second Aspect>

Another embodiment (second aspect) of the present invention is a method of producing a fluorine-containing silica glass powder, which method includes: the first step of prefiring a silicon oxide at a temperature of lower than 1,000°C in the presence of SiF₄ to prepare a fluorine-containing silica; and the second step of subsequently firing the fluorine-containing silica at a temperature of 1,000°C or higher but lower than 1,400°C to produce a silica glass powder. This method preferably includes the annealing step of annealing the fluorine-containing silica obtained in the first step at 300°C or higher but lower than 1,000°C.

The silicon oxide used in the first step is not particularly limited; however, it is preferred to use a so-called dry gel that is a silicon oxide obtained by a sol-gel method.

As one example of the sol-gel method, an alkoxysilane and pure water are added to a reactor each in an amount of 1 to 10 equivalents to perform a sol-gel reaction, and the resultant is subsequently pulverized and dried, whereby a dry gel can be obtained as a silica precursor. For these steps of obtaining a dry gel, any known method, such as the method disclosed in Japanese Unexamined Patent Application Publication No. 2013-15380, can be employed.

In the first step, a fluorine-containing silica is obtained by prefiring the silicon oxide in the presence of SiF₄.

In a preferred mode, in the first step, the silicon oxide is heated to 200°C to 800°C to remove certain amounts of water and hydroxy groups before introducing SiF₄, and SiF₄ is subsequently introduced to introduce fluorine into the silicon oxide. By this, fluorine of SiF₄ added to the reaction system can be prevented from being converted into the form of hydrogen fluoride (HF) due to the generation of water from the silicon oxide in coexistence with SiF₄ and escaping out of the reaction system to be wasted, so that the fluorine source can be used effectively.

The temperature of the prefiring is set at lower than 1,000°C. In this case, fluorine reacts with the surface of the silicon oxide and is thereby incorporated into the silicon oxide. In this process, the temperature is preferably 100°C or higher, more preferably 200°C or higher, most preferably 400°C or higher. Meanwhile, even if the temperature is further elevated, the amount of introduced fluorine does not increase for the energy used for the temperature elevation; therefore, the temperature is preferably 800°C or lower, more preferably 600°C or lower.

The duration of the prefiring varies depending on the prefiring temperature as well as the supply amount of the silicon oxide and that of SiF₄; however, the prefiring is usually performed for 30 minutes or longer, preferably 1 hour or longer, after the temperature reaches a preset temperature, and it is preferred that the prefiring be also performed for 30 minutes or longer, preferably 1 hour or longer, after the introduction of SiF₄. An upper limit of the duration of the prefiring is not particularly limited since it also varies depending on the size and the like of the reactor.

The fluorine-containing silica obtained in this manner is preferably subjected to annealing. By this annealing, fluorine that has reacted with the surface of the silicon oxide is allowed to permeate into the central part of the silicon oxide.

The annealing, because of its technical implications, can be performed in succession to the prefiring. The annealing temperature is not particularly limited as long as it is not higher than a firing temperature, and may be lower than 1,000°C; however, it is preferably 200°C or higher, more preferably 300°C or higher, and still more preferably 400°C or higher. Meanwhile, an upper limit thereof is preferably 800°C or lower, more preferably 700°C or lower, and most preferably 600°C or lower, since it is a waste of energy to elevate the temperature more than necessary. The duration of the annealing is dependent on the annealing temperature and is not particularly limited, and it may be 20 minutes or longer, 1 hour or longer, but 24 hours or shorter.

After the completion of the annealing, as the second step, the resultant is fired at a temperature of 1,000°C or higher but lower than 1,400°C. An upper limit of the firing temperature is lower than the temperature at which the silica is melted (which varies depending on the desired fluorine concentration), and the firing temperature is more preferably lower than the softening point of the silica having a target fluorine concentration by at least 50°C. The duration of the firing is not particularly limited; however, it is usually 1 hour or longer.

The fluorine-containing silica glass powder of the present embodiment obtained in this manner has a low refractive index and thus can be preferably used as a material of a cladding or overcladding of an optical fiber. It is noted here that the fluorine-containing silica glass powder of the present embodiment can also be used as an optical member other than a cladding or overcladding of an optical fiber.

In the fluorine-containing silica glass powder, fluorine can be incorporated at any concentration by adjusting the amount of SiF₄ to be used. The fluorine concentration is usually 0.05% by weight or higher, preferably 0.1% by weight or higher, still more preferably 0.15% by weight or higher, and yet still more preferably 0.2% by weight or higher. An upper limit thereof is not limited; however, it is usually 40% by weight or lower, and may be 10% by weight or lower, or 5% by weight or lower. A method that uses SiF₄ as a fluorine raw material can easily elevate the fluorine concentration and is thus particularly suitable for the production of a fluorine-containing silica glass powder having a fluorine concentration of 2% by weight or higher.

The fluorine-containing silica glass powder may contain metal impurities, and the content thereof is preferably 1,000 ppm or less, more preferably 500 ppm or less, and still more preferably 100 ppm or less. By controlling the concentration of the metal impurities to be low, a loss of light can be inhibited when the fluorine-containing silica glass powder is used as a cladding or overcladding of an optical fiber. Typical examples of the metal impurities include transition metals, more specifically copper, iron, and chromium. Alkaline earth metals, alkali metals, and the like modify the physical properties such as melt viscosity, and catalyze the crystallization of silica glass to cause devitrification; therefore, the concentration thereof is preferably reduced. As a means for reducing the concentration of these metal impurities, any method known as a method of producing a conventional synthetic silica glass powder not doped with fluorine can be applied.

The fluorine concentration in the fluorine-containing silica glass powder can be quantified by ion chromatography of an aqueous solution obtained by melting the fluorine-containing silica glass powder with an alkali and dissolving the resultant in water. Further, the concentration of the metal impurities can be quantified by an ICP-MS measurement of a sample obtained by heat-dissolving the fluorine-containing silica glass powder in a mixed acid of hydrofluoric acid and sulfuric acid, further heating and evaporating the resulting mixture until sulfuric acid droplets remain, and then dissolving the resultant in pure water.

The specific surface area of the fluorine-containing silica glass powder is not particularly limited; however, it is usually 0.001 m²/g or more, preferably 0.01 m²/g or more, but usually 1 m²/g or less, preferably 0.3 m²/g or less.

The fluorine-containing silica glass powder has a particle size of preferably 1 mm or less, more preferably 500 um or less, but preferably 1 µm or more, more preferably 10 µm or more. When the particle size of the fluorine-containing silica glass powder is 1 mm or less as a whole, 50% by weight or more, preferably 75% or more by weight of the fluorine-containing silica glass powder passes through a sieve having a negotiated mesh size of 1 mm. When a lower limit value of the particle size is 20 µm or more, 50% by weight or more, preferably 75% by weight or more of the fluorine-containing silica glass powder does not pass through a sieve having a negotiated mesh size of 20 µm as prescribed in JIS Z8801-1. Further, when the value is set at less than 20 µm, 50% by weight or more, preferably 80% by weight or more of the fluorine-containing silica glass powder as a whole has a particle size of the lower limit value or more as measured by a laser particle size analyzer.

Moreover, when the fluorine-containing silica glass powder is classified using a sieve, it is preferred that the particles having a particle size of more than 150 µm but 300 µm or less constitute 50% by weight or more of all particles. It is noted here that the "particles having a particle size of more than 150 µm but 300 µm or less" means particles that pass through a stainless steel mesh having a mesh size of 300 µm but do not pass through a stainless steel mesh having a mesh size of 150 um, and may be hereinafter referred to as "particles having a particle size of 150-300 µm". The mesh size of these sieves used for measurement is prescribed in JIS Z8801-1:2006, and sieves each having a nominal mesh size of 300 µm or 150 µm may be used.

A method of producing an optical fiber, which method includes the step of forming an overcladding using the fluorine-containing silica glass powder of the present embodiment, will now be described.

In one example, a primary preform (core rod) made of glass is arranged in an overcladding tube, and the space between the primary preform and the overcladding tube is filled with the fluorine-containing synthetic silica glass powder. Subsequently, the overcladding tube filled with the silica glass powder is placed in a furnace, and the glass (tube and silica glass powder) is softened and drawn, whereby an optical fiber can be produced. Alternatively, an optical fiber may be produced from a secondary preform obtained by once melt-vitrifying the overcladding tube filled with the silica glass powder, without direct drawing. As the overcladding tube, a tube made of glass can be used, or a commercially available product may be used as well. The temperature of the furnace used for softening the glass can be set as appropriate by a person of ordinary skill in the art, and may be, for example, 2,000°C to 2,500°C.

A method of producing an optical fiber is not limited to the above-described method, and an optical fiber may be produced by any known method.

The fluorine-containing silica glass powder of the present embodiment can also be used as a raw material of a jacket tube (hereinafter, may be also referred to as "tube" or "cylinder") in the production of a cladding part by a jacket method (sleeving method), or as a raw material of a substrate tube on which soot is deposited in an MCVD method or the like.

### <Third Aspect>

Yet another embodiment (third aspect) of the present invention is a method of producing a fluorine-containing silica glass powder, which method includes: the first step' of prefiring a silicon oxide at a temperature of 750°C or lower in the presence of an ammonium fluoride to obtain a fluorine-containing silica; and the second step' of firing the thus obtained fluorine-containing silica at a temperature of 1,000°C or higher but lower than 1,400°C to obtain a silica glass powder.

The silicon oxide used in the first step' is not particularly limited; however, it is preferred to use a so-called dry gel that is a silicon oxide obtained by a sol-gel method.

As one example of the sol-gel method, an alkoxysilane and pure water are added to a reactor each in an amount of 1 to 10 equivalents to perform a sol-gel reaction, and the resultant is subsequently pulverized and dried, whereby a dry gel can be obtained as a silica precursor. For these steps of obtaining a dry gel, any known method, such as the method disclosed in Japanese Unexamined Patent Application Publication No. 2013-15380, can be employed.

The specific surface area of the silicon oxide is not particularly limited; however, it is usually 1 m²/g or more, preferably 10 m²/g or more, more preferably 300 m²/g or more, but usually 10,000 m²/g or less, preferably 1,000 m²/g or less. The value of preferred specific surface area at the time of adding a fluorine source is also the same.

In the first step', a fluorine-containing silica is obtained by prefiring the silicon oxide in the presence of an ammonium fluoride.

As the ammonium fluoride, for example, NF₄HF₂ that is an acidic salt, or Me₄NF obtained by substitution on the nitrogen of ammonium with organic functional groups can be used, let alone NH₄F.

The temperature of the prefiring is set at 750°C or lower. In this case, fluorine reacts with the surface of the silicon oxide and is thereby incorporated into the silicon oxide. In this process, the temperature is preferably 700°C or lower, more preferably 650°C or lower, and still more preferably 600°C or lower. A lower limit thereof is not limited; however, in order to prevent, after decomposition of the ammonium fluoride, a portion of the resultant from being converted into HF without being incorporated into the silica, the temperature of the prefiring is preferably 250°C or higher, more preferably 400°C or higher.

The ammonium fluoride such as NH₄F can be added after being mixed in the form of a solid powder with the silicon oxide used as a raw material, and this can simplify the step. The ammonium fluoride to be used is preferably one which contains only a small amount of impurities and has a purity of preferably 99.5% or higher, more preferably 99.9% or higher. Further, at the time of being mixed with pulverized silicon oxide, the ammonium fluoride is more preferred and advantageous to be in a granular or powder form rather than an aggregated form and, for example, the ammonium fluoride preferably has a particle size of 1 mm or less.

In the early stage of the prefiring, water is likely to be generated from the silicon oxide; therefore, at a temperature of 150°C or lower, particularly 100°C or lower, it is preferred that a lid be openable with an internal pressure in the case of batchwise prefiring; that water be discharged from the reactor with a flow of carrier gas; and/or that the silicon oxide be fired in advance at a temperature higher than the prefiring temperature before being mixed with the ammonium fluoride.

The ammonium fluoride is supplied in the form of a powder and, for example, it is melted or decomposed at a low temperature after the removal of water and reacts as a fluorination agent, and the contact between the silicon oxide and the ammonium fluoride is increased by mixing the silicon oxide and the powder of the ammonium fluoride; therefore, fluorine can more easily permeate to and react with the center of the dry gel as compared to other method where the fluorine raw material is supplied in the form of a gas. A low prefiring temperature greatly contributes to saving the production energy, and is thus a major advantage attained by the use of an ammonium fluoride as a raw material.

The duration of the prefiring varies depending on the reaction conditions such as the prefiring temperature and the supply amount of the dry gel; however, the prefiring is usually performed for 30 minutes or longer, preferably 1 hour or longer, after the temperature reaches 250°C or higher. An upper limit of the duration of the prefiring is not particularly limited since it also varies depending on the size and the like of the reactor.

Further, after the prefiring, annealing may be performed at a temperature lower than a firing temperature. Nevertheless, from the standpoint of economic efficiency, it is preferred not to perform annealing.

In the second step', a fluorine-containing silica glass powder is obtained by firing the above-obtained fluorine-containing silica at 1,000°C or higher but lower than 1,400°C. The firing temperature is more preferably 1,100°C or higher. An upper limit of the firing temperature is not higher than the temperature at which the silica is melted (which varies depending on the desired fluorine concentration), and the firing temperature is more preferably lower than the softening point of the silica having a target fluorine concentration by at least 50°C. The duration of the firing is not particularly limited; however, it is usually 1 hour or longer. When the firing temperature is 1,400°C or higher, the resulting fluorine-containing silica glass powder cannot maintain a particle shape.

The fluorine-containing silica glass powder of the present embodiment obtained in this manner has a low refractive index and thus can be preferably used as a material of a cladding or overcladding of an optical fiber. It is noted here that the fluorine-containing silica glass powder of the present embodiment can also be used as an optical member other than a cladding or overcladding of an optical fiber.

In the fluorine-containing silica glass powder, fluorine can be incorporated at any concentration by adjusting the amount of the ammonium fluoride to be used, and the fluorine concentration is usually 0.05% by weight or higher, preferably 0.1% by weight or higher, still more preferably 0.15% by weight or higher, and yet still more preferably 0.2% by weight or higher, further more preferably 0.8% by weight or higher, particularly preferably 1.0% by weight or higher. An upper limit thereof is not limited; however, it is usually 40% by weight or lower, and may be 5% by weight or lower.

The fluorine-containing silica glass powder may contain metal impurities, and the content thereof is preferably 1,000 ppm or less, more preferably 500 ppm or less, and still more preferably 100 ppm or less. By controlling the concentration of the metal impurities to be low, a loss of light can be inhibited when the fluorine-containing silica glass powder is used as a cladding or overcladding of an optical fiber. Typical examples of the metal impurities include transition metals, more specifically copper, iron, and chromium. Alkaline earth metals, alkali metals, and the like modify the physical properties such as melt viscosity, and catalyze the crystallization of silica glass to cause devitrification; therefore, the concentration thereof is preferably reduced. As a means for reducing the concentration of these metal impurities, any method known as a method of producing a conventional synthetic silica glass powder not doped with fluorine can be applied.

### (Method of Measuring Fluorine Content)

The fluorine concentration in the fluorine-containing silica glass powder can be quantified by ion chromatography of an aqueous solution obtained by melting the fluorine-containing silica glass powder with an alkali and dissolving the resultant in water. Further, the concentration of the metal impurities can be quantified by an ICP-MS measurement of a sample obtained by heat-dissolving the fluorine-containing silica glass powder in a mixed acid of hydrofluoric acid and sulfuric acid, further heating and evaporating the resulting mixture until sulfuric acid droplets remain, and then dissolving the resultant in pure water.

The specific surface area of the fluorine-containing silica glass powder is not particularly limited; however, it is usually 0.001 m²/g or more, preferably 0.01 m²/g or more, but usually 1 m²/g or less, preferably 0.3 m²/g or less.

The fluorine-containing silica glass powder has a particle size of preferably 1 mm or less, more preferably 500 µm or less, but preferably 1 µm or more, more preferably 10 µm or more, and still more preferably 20 um or more. When the particle size of the fluorine-containing silica glass powder is 1 mm or less as a whole, 50% by weight or more, preferably 75% by weight or more of the fluorine-containing silica glass powder passes through a sieve having a nominal mesh size of 1 mm. When a lower limit value of the particle size is 20 µm or more, 50% by weight or more, preferably 75% by weight or more of the fluorine-containing silica glass powder does not pass through a sieve having a nominal mesh size of 20 µm as prescribed in JIS 8801-1. Further, when the value is set at less than 20 µm, 50% by weight or more, preferably 80% by weight or more of the fluorine-containing silica glass powder as a whole has a particle size of the lower limit value or more as measured by a laser particle size analyzer.

Moreover, when the fluorine-containing silica glass powder is classified using a sieve, it is preferred that the particles having a particle size of more than 150 µm but 300 µm or less constitute 50% by weight or more of all particles. It is noted here that the "particles having a particle size of more than 150 µm but 300 µm or less" means particles that pass through a stainless steel mesh having a mesh size of 300 µm but do not pass through a stainless steel mesh having a mesh size of 150 µm, and may be hereinafter referred to as "particles having a particle size of 150-300 µm". The mesh size of these sieves used for measurement is prescribed in JIS Z8801-1:2006, and sieves each having a nominal mesh size of 300 µm or 150 µm may be used.

A method of producing an optical fiber, which method includes the step of forming an overcladding using the fluorine-containing silica glass powder of the present embodiment, will now be described.

In one example, a primary preform (core rod) made of glass is arranged in an overcladding tube, and the space between the primary preform and the overcladding tube is filled with the fluorine-containing synthetic silica glass powder. Subsequently, the overcladding tube filled with the silica glass powder is placed in a furnace, and the glass (tube and silica glass powder) is softened and drawn, whereby an optical fiber can be produced. Alternatively, an optical fiber may be produced from a secondary preform obtained by once melt-vitrifying the overcladding tube filled with the silica glass powder, without direct drawing. As the overcladding tube, a tube made of a glass can be used, and the overcladding tube can be produced by using the fluorine-containing silica glass powder of the present embodiment as a raw material; however, a commercially available product may be used as well. The temperature of the furnace used for softening the glass can be set as appropriate by a person of ordinary skill in the art, and may be, for example, 2,000°C to 2,500°C.

A method of producing an optical fiber is not limited to the above-described method, and an optical fiber may be produced by any known method.

The fluorine-containing silica glass powder of the present embodiment can also be used as a raw material of a jacket tube (hereinafter, may be also referred to as "tube" or "cylinder") in the production of a cladding part by a jacket method (sleeving method), or as a raw material of a substrate tube on which soot is deposited in an MCVD method or the like.

The fluorine-containing silica glass powder of the present embodiment that is obtained in the above-described manner and has a high fluorine concentration can be used for the formation of a cladding layer of an optical fiber. Particularly, a single optical fiber which contains therein plural cores, and an optical fiber having a high allowable curvature can be easily produced.

Moreover, the fluorine-containing silica glass powder may be used with an addition of a viscosity modifier, for example, an alkali metal oxide such as potassium oxide.

### <Fourth Aspect>

Yet another embodiment (fourth aspect) of the present invention is a method of producing a fluorine-containing silica glass powder, which method includes: the first step" of prefiring a silicon oxide at a temperature of 850°C or lower in the presence of a fluorocarbon to obtain a fluorine-containing silica; and the second step'' of annealing the thus obtained fluorine-containing silica at a temperature of not higher than a firing temperature and subsequently firing the resultant at a temperature of 1,000°C or higher to obtain a silica glass powder, and in which the temperature does not exceed 850°C before the prefiring performed in the presence of a fluorocarbon.

The silicon oxide used in the first step'' is not particularly limited; however, it is preferred to use a so-called dry gel that is a silicon oxide obtained by a sol-gel method.

As one example of the sol-gel method, an alkoxysilane and pure water are added to a reactor each in an amount of 1 to 10 equivalents to perform a sol-gel reaction, and the resultant is subsequently pulverized and dried, whereby a dry gel can be obtained as a silica precursor. For these steps of obtaining a dry gel, any known method, such as the method disclosed in Japanese Unexamined Patent Application Publication No. 2013-15380, can be employed.

In the first step'', a fluorine-containing silica is obtained by prefiring the silicon oxide in the presence of a fluorocarbon.

The temperature of the prefiring is set at 850°C or lower. In this case, fluorine reacts with the surface of the silicon oxide and is thereby incorporated into the silicon oxide. In this process, the temperature is preferably 700°C or higher, more preferably 750°C or higher. In the first step, it is more preferred to supply oxygen in the presence of the fluorocarbon for decomposition of the fluorocarbon and to prevent carbon derived from the fluorocarbon from remaining in the resulting silica glass.

The fluorocarbon to be used is not particularly limited as long as it can be decomposed at a temperature of 850°C or lower to supply fluorine, and a solid such as polytetrafluoroethylene can be used; however, it is preferably a gas such as a perfluoro-based fluorocarbon, chlorofluoro-based fluorocarbon, or a hydrofluoro-based fluorocarbon, particularly preferably a perfluoro-based fluorocarbon that does not generate water when decomposed, most preferably C₂F₆.

Further, in the early stage of the prefiring, water may be generated from the silicon oxide; therefore, in order to prevent fluorine, which is derived from the fluorocarbon added to the reaction system, from being converted into the form of hydrogen fluoride (HF) and escaping out of the reaction system to be wasted, it is preferred to allow the fluorocarbon to exist in the middle of the prefiring. Specifically, in the process of elevating the temperature for the prefiring, it is preferred to start introducing the fluorocarbon into the reactor after the temperature reaches 100°C or higher, more preferably 130°C or higher. As for an upper limit of this temperature, it is preferred to start introducing the fluorocarbon into the reactor at 850°C or lower.

The duration of the prefiring varies depending on the prefiring temperature and the supply amount of the fluorocarbon; however, the prefiring is usually performed for 30 minutes or longer, preferably 1 hour or longer, after the temperature reaches 700°C or higher. An upper limit of the duration of the prefiring is not particularly limited since it also varies depending on the size and the like of the reactor.

In the second step'', the fluorine-containing silica obtained in this manner is subjected to annealing. By this annealing, fluorine that has reacted with the surface of the silicon oxide is allowed to permeate into the central part of the silicon oxide.

The annealing, because of its technical implications, can be performed in succession to the prefiring, and the temperature thereof is not particularly limited as long as it is not higher than a firing temperature; however, it is preferably 850°C or lower. The duration of the annealing is also not particularly limited, and it may be usually 10 minutes or longer, preferably 15 minutes or longer, more preferably 1 hour or longer, but 24 hours or shorter. Further, there is no technical problem even if the fluorocarbon is continuously supplied during the annealing. From the standpoint of economic efficiency, however, it is preferred to terminate the supply of the fluorocarbon and to use a dry air or the like. This annealing does not necessarily means to perform a heat treatment and, depending on the heat capacity of the equipment, the annealing can be replaced by an operation of once terminating heating after the prefiring to lower the temperature of the reactor, or an operation of elevating the temperature after the prefiring up to a firing temperature. When heating is continuously performed after the prefiring, the temperature is preferably elevated to a firing temperature over a period of 10 minutes or longer, preferably 15 minutes or longer, more preferably 20 minutes or longer.

After the completion of the annealing, the temperature is maintained in the case of giving importance to the energy efficiency, or the temperature is lowered once in the case of giving importance to the fluorine concentration in the resulting silica glass powder, and firing is subsequently performed at a temperature not lower than the prefiring temperature, preferably at 1,000°C or higher. An upper limit of the firing temperature is not higher than the temperature at which the silica is melted (which varies depending on the desired fluorine concentration), and the firing temperature is more preferably lower than the softening point of the silica having a target fluorine concentration by at least 50°C. The duration of the firing is not particularly limited; however, it is usually 1 hour or longer.

It is noted here that the temperature does not exceed 850°C before the prefiring performed in the presence of a fluorocarbon. When the temperature exceeds 850°C, the surface area is reduced, resulting in a reduction in the amount of doped fluorine.

The fluorine-containing silica glass powder of the present embodiment obtained in this manner has a low refractive index and thus can be preferably used as a material of a cladding or overcladding of an optical fiber. It is noted here that the fluorine-containing silica glass powder of the present embodiment can also be used as an optical member other than a cladding or overcladding of an optical fiber.

In the fluorine-containing silica glass powder, fluorine can be incorporated at any concentration by adjusting the amount of the fluorocarbon to be used, and the fluorine concentration is usually 0.05% by weight or higher, preferably 0.1% by weight or higher, still more preferably 0.15% by weight or higher, yet still more preferably 0.2% by weight or higher, further more preferably 0.8% by weight or higher, and particularly preferably 1.0% by weight or higher. An upper limit thereof is not limited; however, it is usually 40% by weight or lower, and may be 10% by weight or lower.

The fluorine-containing silica glass powder may contain metal impurities, and the content thereof is preferably 1,000 ppm or less, more preferably 500 ppm or less, and still more preferably 100 ppm or less. By controlling the concentration of the metal impurities to be low, a loss of light can be inhibited when the fluorine-containing silica glass powder is used as a cladding or overcladding of an optical fiber. Typical examples of the metal impurities include transition metals, more specifically copper, iron, and chromium. Alkaline earth metals, alkali metals, and the like modify the physical properties such as melt viscosity, and catalyze the crystallization of silica glass to cause devitrification; therefore, the concentration thereof is preferably reduced. As a means for reducing the concentration of these metal impurities, any method known as a method of producing a conventional synthetic silica glass powder not doped with fluorine can be applied.

The fluorine concentration in the fluorine-containing silica glass powder can be quantified by ion chromatography of an aqueous solution obtained by melting the fluorine-containing silica glass powder with an alkali and dissolving the resultant in water. Further, the concentration of the metal impurities can be quantified by an ICP-MS measurement of a sample obtained by heat-dissolving the fluorine-containing silica glass powder in a mixed acid of hydrofluoric acid and sulfuric acid, further heating and evaporating the resulting mixture until sulfuric acid droplets remain, and then dissolving the resultant in pure water.

The specific surface area of the fluorine-containing silica glass powder is not particularly limited; however, it is usually 0.001 m²/g or more, preferably 0.01 m²/g or more, but usually 1 m²/g or less, preferably 0.3 m²/g or less.

The fluorine-containing silica glass powder has a particle size of preferably 1 mm or less, more preferably 500 µm or less, but preferably 1 µm or more, more preferably 10 µm or more, and still more preferably more than 20 µm. When the particle size is in this range, not only the fluorine-containing silica glass powder can be easily handled as a powder material, but also vitrification and introduction of fluorine can be easily performed, which are preferred. It is noted here that the particle size can be determined by a general particle size distribution measurement based on sieving, laser diffraction, or the like.

The feature that the fluorine-containing silica glass powder as a whole has a particle size of 1 mm or less means that 50% by weight or more, preferably 75% by weight or more of all particles pass through a sieve having a nominal mesh size of 1 mm.

When a lower limit value of the particle size is 20 µm or more, 50% by weight or more, preferably 75% by weight or more of all particles do not pass through a sieve having a nominal mesh size of 20 um as prescribed in JIS 8801-1. Further, when the lower limit value is set at 20 µm or less, 50% by weight or more, preferably 80% by weight or more of all particles have a particle size of the lower limit value or more as measured by a laser particle size analyzer.

More preferably, when the fluorine-containing silica glass powder is classified using a sieve, particles having a particle size of more than 150 um but 300 um or less constitute preferably 3% by weight or more, more preferably 50 weight or more of all particles. An upper limit of this value is not limited and may be 100% by weight; however, it is usually 95% by weight or less. By controlling the particle size in the above-described range, the amount of introduced fluorine can be increased, which is preferred.

A method of producing an optical fiber, which method includes the step of forming an overcladding using the fluorine-containing silica glass powder of the present embodiment, will now be described.

In one example, a primary preform (core rod) made of glass is arranged in an overcladding tube, and the space between the primary preform and the overcladding tube is filled with the fluorine-containing synthetic silica glass powder. Subsequently, the overcladding tube filled with the silica glass powder is placed in a furnace, and the glass (tube and silica glass powder) is softened and drawn, whereby an optical fiber can be produced. Alternatively, an optical fiber may be produced from a secondary preform obtained by once melt-vitrifying the overcladding tube filled with the silica glass powder, without direct drawing. As the overcladding tube, a tube made of a silica glass can be used, and the overcladding tube can be produced by using the fluorine-containing synthetic silica glass powder of the present invention as a raw material; however, a commercially available product may be used as well. The temperature of the furnace used for softening the glass can be set as appropriate by a person of ordinary skill in the art, and may be, for example, 2,000°C to 2,500°C.

A method of producing an optical fiber is not limited to the above-described method, and an optical fiber may be produced by any known method.

The fluorine-containing silica glass powder of the present embodiment can also be used as a raw material of a jacket tube (hereinafter, may be also referred to as "tube" or "cylinder") in the production of a cladding part by a jacket method (sleeving method), or as a raw material of a substrate tube on which soot is deposited in an MCVD method or the like.

### EXAMPLES

The present invention will now be described in more detail by way of Examples; however, the scope of the present invention is not limited by the below-described Examples.

### <Example A: First Aspect>

### [Example A1]

A dry silica gel powder in an amount of 5 kg, which was obtained by hydrolysis-condensation of tetramethoxysilane, was fired in a dry air atmosphere at 800°C for 10 hours to prepare 4.3 kg of a raw material silica gel powder. Subsequently, 40 g of this raw material silica gel powder was fluorinated in a mixed gas circulating atmosphere of 5 mL/min of perfluoroethane and 5 mL/min of oxygen at 800°C for 2 hours, and the resultant was naturally cooled to prepare 40 g of a fluorine-doped silica gel powder. This fluorine-doped silica gel powder had a fluorine concentration of 1.0% by weight-F. Thereafter, 30 g of the fluorine-doped silica gel powder was heat-treated in a dry air atmosphere at 1,000°C for 1 hour, whereby 30 g of a fluorine-doped synthetic quartz glass powder was obtained. The thus obtained fluorine-doped synthetic quartz glass powder had a fluorine concentration of 0.7% by weight-F.

### [Examples and Comparative Examples]

First, 2.1 kg of the raw material silica gel used in Example A1 was sieved in portions of about 110 g for a total of 20 times. One example of the results thereof is shown in Table 1. For each of the samples belonging to the classes of more than 75 µm, a fluorination treatment was performed in a mixed gas circulating atmosphere of 5 mL/min of perfluoroethane and 5 mL/min of oxygen at 800°C for 2 hours to obtain fluorine-doped silica gel powders. Subsequently, these fluorine-doped silica gel powders were each heat-treated in a dry air atmosphere at 1,000°C for 1 hour, whereby fluorine-doped synthetic quartz glass powders were obtained. The weight and fluorine concentration of each sample are shown in Table 2.

**Table 1. Example of Sieving Results of Raw Material Silica Gel**

| Particle system (µm) | Weight | Ratio |
|---|---|---|
| More than 425 | 1.3 g | 1.3 wt% |
| More than 300 but 425 or less | 12.1 g | 12.1 wt% |
| More than 212 but 300 or less | 33.9 g | 33.9 wt% |
| More than 150 but 212 or less | 37.1 g | 37.1 wt% |
| More than 125 but 150 or less | 7.2 g | 7.2 wt% |
| More than 106 but 125 or less | 6.3 g | 6.3 wt% |
| More than 75 but 106 or less | 2.0 g | 2.0 wt% |
| 75 or less | 0.1 g | 0.1 wt% |

**Table 2. Results of Fluorination and Firing Reaction**

| Particle size of raw material gel (µm) | Amount of added raw material gel | Yield of F-gel | F concentration of F-gel | Amount of added F-gel | Yield of F-quartz | F concentration of F-quartz |
|---|---|---|---|---|---|---|
| More than 425 | 40 g | 39 g | 0.6wt%-F | 30 g | 30 g | 0.5wt%-F |
| More than 300 but 425 or less | 40 g | 39 g | 0.7wt%-F | 30 g | 30 g | 0.6wt%-F |
| More than 212 but 300 or less | 40 g | 40 g | 1.0wt%-F | 30 g | 30 g | 0.9wt%-F |
| More than 150 but 212 or less | 40 g | 40 g | 1.2wt%-F | 30 g | 30 g | 1.0wt%-F |
| More than 125 but 150 or less | 40 g | 40 g | 0.6wt%-F | 30 g | 30 g | 0.5wt%-F |
| More than 106 but 125 or less | 40 g | 40 g | 0.5wt%-F | 30 g | 30 g | 0.4wt%-F |
| More than 75 but 106 or less | 40 g | 40 g | 0.4wt%-F | 30 g | 30 g | 0.4wt%-F |

As apparent from the above results, it can be understood that the particles having a particle size of more than 150 µm but 300 µm or less are silica glass powder retaining a high fluorine concentration. This enables to easily produce an optical fiber.

### [Example A2]

A dry silica gel powder in an amount of 100 kg, which was obtained by hydrolysis-condensation of tetramethoxysilane, was fired in a dry air atmosphere at 800°C for 11 hours and 40 minutes to prepare a raw material silica gel powder. Subsequently, 7 kg of this raw material silica gel powder was fluorinated in a 1:1 mixed gas circulating atmosphere of perfluoroethane and oxygen at 800°C for 4 hours, and the resultant was naturally cooled to prepare a fluorine-doped silica gel powder. This fluorine-doped silica gel powder was heat-treated in a 50 mL/min oxygen atmosphere at 1,000°C for 36 hours, whereby a fluorine-doped synthetic quartz glass powder was obtained. The thus obtained fluorine-doped synthetic quartz glass powder had a fluorine concentration of 1.6% by weight-F.

Thereafter, 100 g of the fluorine-doped synthetic quartz glass powder was sieved. The results thereof are shown in Table 3.

**Table 3. Example of Sieving Results of Raw Material Silica Gel**

| Particle size (µm) | Weight | Ratio |
|---|---|---|
| More than 425 | 0.6 g | 0.6 wt% |
| More than 300 but 425 or less | 10.5 g | 10.5 wt% |
| More than 212 but 300 or less | 27.5 g | 27.6 wt% |
| More than 150 but 212 or less | 36.8 g | 36.9 wt% |
| More than 106 but 150 or less | 19.1 g | 19.1 wt% |
| More than 75 but 106 or less | 5.2 g | 5.2 wt% |
| More than 45 but 75 or less | 0.1 g | 0.1 wt% |
| 45 or less | 0.0 g | 0.0 wt% |

### <Example B: Second Aspect>

### [Example B1]

A dry silica gel powder in an amount of 5 kg, which was obtained by hydrolysis-condensation of tetramethoxysilane, was prefired in a dry air atmosphere at 500°C for 10 hours to prepare 4.2 kg of a raw material silica gel powder. Then, 1 kg of this raw material silica gel powder was allowed to react with 200 g of silicon tetrafluoride (SiF₄) at 250°C for 9 hours (prefiring) to obtain 1.1 kg of a fluorine-doped silica gel. The thus obtained fluorine-doped silica gel powder had a fluorine concentration of 8.9% by weight-F. Subsequently, 40 g of the fluorine-doped silica gel powder was annealed in a dry air atmosphere at 400°C for 2 hours to obtain 39 g of an annealed gel. This annealed gel had a fluorine concentration of 8.5% by weight-F. Thereafter, 30 g of the annealed gel was heat-treated in a dry air atmosphere at 1,000°C for 1 hour, whereby 28 g of a fluorine-containing silica glass powder was obtained. The thus obtained fluorine-containing silica glass powder had a fluorine concentration of 4.1% by weight-F.

### [Example B2]

The fluorine-doped silica gel powder used in Example B1, which was in an amount of 40 g (fluorine concentration = 8.9% by weight), was annealed in a dry air atmosphere at 600°C for 2 hours to obtain 37 g of an annealed gel. This annealed gel had a fluorine concentration of 4.7% by weight-F. Thereafter, 30 g of the annealed gel was heat-treated in a dry air atmosphere at 1,000°C for 1 hour, whereby 29 g of a fluorine-containing silica glass powder was obtained. The thus obtained fluorine-containing silica glass powder had a fluorine concentration of 3.9% by weight-F.

### [Example B3]

The fluorine-doped silica gel powder used in Example B1, which was in an amount of 30 g (fluorine concentration = 8.9% by weight), was heat-treated in a dry air atmosphere at 1,000°C for 1 hour, whereby 27 g of a fluorine-containing silica glass powder was obtained. The thus obtained fluorine-containing silica glass powder had a fluorine concentration of 3.7% by weight-F.

### [Example B4]

The fluorine-doped silica gel powder used in Example B1, which was in an amount of 30 g (fluorine concentration = 8.9% by weight), was annealed in a dry air atmosphere at 250°C for 2 hours to obtain 29 g of an annealed gel. This annealed gel had a fluorine concentration of 8.1% by weight-F. Thereafter, 27 g of the annealed gel was heat-treated in a dry air atmosphere at 1,000°C for 1 hour, whereby 25 g of a fluorine-containing silica glass powder was obtained. The thus obtained fluorine-containing silica glass powder had a fluorine concentration of 3.1% by weight-F. It is seen that, when annealing is not performed at an appropriate temperature, although a gel apparently having a very high fluorine concentration can be obtained, firing causes dissociation of fluorine.

### [Example B5]

The fluorine-doped silica gel powder used in Example B1, which was in an amount of 40 g (fluorine concentration = 8.9% by weight), was annealed in a dry air atmosphere at 800°C for 2 hours to obtain 36 g of an annealed gel. This annealed gel had a fluorine concentration of 3.6% by weight-F. Thereafter, 30 g of the annealed gel was heat-treated in a dry air atmosphere at 1,000°C for 1 hour, whereby 30 g of a fluorine-containing silica glass powder was obtained. The thus obtained fluorine-containing silica glass powder had a fluorine concentration of 2.6% by weight-F.

As described above, by bringing SiF₄ into contact with a silicon oxide at an appropriate temperature, more preferably by subsequently annealing and firing the resultant at an appropriate temperature, a previously unattainable large amount of fluorine can be incorporated into the resulting silica glass powder, and this enables to not only easily produce an optical fiber, but also produce an optical fiber having a more complex structure at the same thickness because of a large difference in the refractive index, a high bending strength, and an excellent light-trapping efficiency.

### <Example C: Third Aspect>

### [Example C1]

A dry silica gel powder was obtained in an amount of 5 kg by hydrolysis condensation of tetramethoxysilane. This dry silica gel was subjected to first prefiring in a dry air atmosphere at 600°C for 10 hours to prepare 4.1 kg of a raw material silica gel powder. This raw material silica gel had a specific surface area of 524.3 m²/g, an average pore size of 2.272 nm, and a pore volume of 0.2978 cc/g. These values were measured by a nitrogen adsorption method, including other Examples. Subsequently, 5.1 g of the raw material silica gel powder was mixed with 0.67 g of ammonium fluoride, and the resultant was put into an alumina crucible and fired at 400°C for 2 hours (second prefiring) to obtain 5.0 g of a fluorine-doped silica gel powder. This fluorine-doped silica gel powder had a fluorine concentration of 3.7% by weight-F. Thereafter, 2.8 g of the fluorine-doped silica gel powder was heat-treated in a dry air atmosphere at 1,200°C for 1 hour, whereby 2.6 g of a fluorine-containing silica glass powder was obtained. The thus obtained fluorine-containing silica glass powder had a fluorine concentration of 2.9% by weight-F.

### [Example C2]

A dry silica gel powder in an amount of 5 kg, which was obtained by hydrolysis-condensation of tetramethoxysilane, was subjected to first prefiring in a dry air atmosphere at 500°C for 10 hours to prepare 4.2 kg of a raw material silica gel powder. This raw material silica gel had a specific surface area of 569.5 m²/g, an average pore size of 2.277 nm, and a pore volume of 0.3241 cc/g. Subsequently, 5.0 g of the raw material silica gel powder was mixed with 0.66 g of ammonium fluoride, and the resultant was put into an alumina crucible and fired at 400°C for 2 hours (second prefiring) to obtain 4.9 g of a fluorine-doped silica gel powder. This fluorine-doped silica gel powder had a fluorine concentration of 4.5% by weight-F. Thereafter, 2.7 g of the fluorine-doped silica gel powder was heat-treated in a dry air atmosphere at 1,200°C for 1 hour, whereby 2.5 g of a fluorine-containing silica glass powder was obtained. The thus obtained fluorine-containing silica glass powder had a fluorine concentration of 2.8% by weight-F.

### [Example C3]

A dry silica gel powder in an amount of 5 kg, which was obtained by hydrolysis-condensation of tetramethoxysilane, was subjected to first prefiring in a dry air atmosphere at 400°C for 10 hours to prepare 4.5 kg of a raw material silica gel powder. This raw material silica gel had a specific surface area of 749.3 m²/g, an average pore size of 2.263 nm, and a pore volume of 0.424 cc/g. Subsequently, 4.9 g of the raw material silica gel powder was mixed with 0.65 g of ammonium fluoride, and the resultant was put into an alumina crucible and fired at 400°C for 2 hours (second prefiring) to obtain 4.8 g of a fluorine-doped silica gel powder. This fluorine-doped silica gel powder had a fluorine concentration of 4.4% by weight-F. Thereafter, 2.9 g of the fluorine-doped silica gel powder was heat-treated in a dry air atmosphere at 1,200°C for 1 hour, whereby 2.7 g of a fluorine-containing silica glass powder was obtained. The thus obtained fluorine-containing silica glass powder had a fluorine concentration of 1.9% by weight-F.

### [Example C4]

A dry silica gel powder in an amount of 5 kg, which was obtained by hydrolysis-condensation of tetramethoxysilane, was subjected to first prefiring in a dry air atmosphere at 700°C for 10 hours to prepare 4.1 kg of a raw material silica gel powder. This raw material silica gel had a specific surface area of 409.4 m²/g, an average pore size of 2.277 nm, and a pore volume of 0.2331 cc/g. Subsequently, 4.9 g of the raw material silica gel powder was mixed with 0.67 g of ammonium fluoride, and the resultant was put into an alumina crucible and fired at 400°C for 2 hours (second prefiring) to obtain 4.7 g of a fluorine-doped silica gel powder. This fluorine-doped silica gel powder had a fluorine concentration of 1.7% by weight-F. Thereafter, 3.4 g of the fluorine-doped silica gel powder was heat-treated in a dry air atmosphere at 1,200°C for 1 hour, whereby 3.3 g of a fluorine-containing silica glass powder was obtained. The thus obtained fluorine-containing silica glass powder had a fluorine concentration of 1.5% by weight-F.

### [Comparative Example C1]

A dry silica gel powder in an amount of 5 kg, which was obtained by hydrolysis-condensation of tetramethoxysilane, was subjected to first prefiring in a dry air atmosphere at 800°C for 10 hours to prepare 4.1 kg of a raw material silica gel powder. This raw material silica gel had a specific surface area of 406.7 m²/g, an average pore size of 2.303 nm, and a pore volume of 0.2341 cc/g. Subsequently, 5 g of the raw material silica gel powder was mixed with 0.66 g of ammonium fluoride, and the resultant was put into an alumina crucible and fired at 400°C for 2 hours (second prefiring) to obtain 4.7 g of a fluorine-doped silica gel. This fluorine-doped silica gel powder had a fluorine concentration of 0.4% by weight-F. Thereafter, 2.7 g of the fluorine-doped silica gel powder was heat-treated in a dry air atmosphere at 1,200°C for 1 hour, whereby 2.6 g of a fluorine-containing silica glass powder was obtained. The thus obtained fluorine-containing silica glass powder had a fluorine concentration of 0.1% by weight-F. The above-described results are shown in Table 4. In Table 4, "wt%" means "% by weight".

**Table 4,**

| | Example C1 | Example C2 | Example C3 | Example C4 | Comparative Example Cl |
|---|---|---|---|---|---|
| Amount of added dry silica gel | 5 kg | 5 kg | 5 kg | 5 kg | 5 kg |
| First prefiring temperature | 600 °C | 500 °C | 400 °C | 700 °C | 800 °C |
| Weight of raw material gel | 4.1 kg | 4.2 kg | 4.5 kg | 4.1 kg | 4.1 kg |
| Specific surface area of raw material gel | 524.3m²/g | 569.5m²/g | 749.3m²/g | 409.4m²/g | 406.7m²/g |
| Average pore size of raw material gel | 2.272nm | 2.277nm | 2.263nm | 2.277nm | 2.303nm |
| Pore volume of raw material gel | 0.2978cc/g | 0.3421cc/g | 0.424cc/g | 0.2331cc/g | 0.2341cc/g |
| Amount of added raw material gel | 5.1 g | 5.0 g | 4.9 g | 4.9 g | 5.0 g |
| Amount of added NH₄F | 0.67 g | 0.66 g | 0.65 g | 0.67 g | 0.66 g |
| Weight of F-gel | 5.0 g | 4.9 g | 4.8 g | 4.7 g | 4.7 g |
| F concentration of F-gel | 3.7wt%-F | 4.5wt%-F | 4.4wt%-F | 1.7wt%-F | 0.4wt%-F |
| Amount of added F-gel | 2.8 g | 2.7 g | 2.9 g | 3.4 g | 2.7 g |
| Weight of F-glass powder | 2.6 g | 2.5 g | 2.7 g | 3.3 g | 2.6 g |
| F concentration of F-glass powder | 2.9wt%-F | 2.8wt%-F | 1.9wt%-F | 1.5wt%-F | 0.1wt%-F |

As shown above, by mixing and bringing NH₄F into contact with a silicon oxide and subsequently performing prefiring and then firing, a greater amount of fluorine than before, specifically more than 1% by weight of fluorine, can be stably incorporated into the resulting silica glass powder. In addition, a glass substantially maintaining this fluorine concentration can be produced; therefore, not only an optical fiber can be easily produced therefrom, but also an optical fiber or the like that has a complex structure difficult to achieve in conventional production, for example, an optical fiber having plural light-transmitting layers (paths of light) in a single optical fiber, can be easily produced.

### <Example D: Fourth Aspect>

### [Example D1]

A dry silica gel powder in an amount of 5 kg, which was obtained by hydrolysis-condensation of tetramethoxysilane, was prefired in a dry air atmosphere at 800°C for 10 hours to prepare 4 kg of a raw material silica gel powder. Subsequently, 40 g of this raw material silica gel powder was prefired in a mixed gas circulating atmosphere of 5 mL/min of perfluoroethane and 5 mL/min of oxygen at 800°C for 2 hours, and the resultant was naturally cooled and thereby annealed to prepare 40 g of a fluorine-doped silica gel powder. This fluorine-doped silica gel powder had a fluorine concentration of 1.6% by weight-F. Thereafter, 39 g of the fluorine-doped silica gel powder was heat-treated in a dry air atmosphere at 1,000°C for 1 hour, whereby 39 g of a fluorine-containing silica glass powder was obtained. The thus obtained fluorine-containing silica glass powder had a fluorine concentration of 1.5% by weight-F. It is seen that an annealing effect was also obtained by the process of natural cooling and reheating.

### [Example D2]

After 40 g of the raw material silica gel powder of Example D1 was prefired in a circulating atmosphere of perfluoroethane and oxygen in the same manner as described above, the atmosphere was switched to dry air without removal of the resultant to perform annealing at 800°C for 2 hours, after which the resultant was directly heated to 1,000°C and fired for 1 hour, whereby 41 g of a fluorine-containing silica glass powder was obtained. The thus obtained fluorine-containing silica glass powder had a fluorine concentration of 1.9% by weight-F. It is seen that the amount of doped fluorine was increased by the annealing.

### [Example D3]

A dry silica gel powder in an amount of 5 kg, which was obtained by hydrolysis-condensation of tetramethoxysilane, was prefired in a dry air atmosphere at 800°C for 10 hours to prepare 4.1 kg of a raw material silica gel powder. Subsequently, 30 g of this raw material silica gel powder was prefired in an atmosphere of coexisting perfluoroethane and oxygen in the same manner as in Example 1, and the atmosphere was then switched to dry air without cooling and removal of the resultant (i.e. while continuously heating the resultant), after which the resultant was directly heated from 800°C to 1,000°C over a period of 10 minutes and fired for 1 hour, whereby 30 g of a fluorine-containing silica glass powder was obtained. The thus obtained fluorine-containing silica glass powder had a fluorine concentration of 0.9% by weight-F.

### [Comparative Example D1]

A dry silica gel powder in an amount of 5 kg, which was obtained by hydrolysis-condensation of tetramethoxysilane, was prefired in a dry air atmosphere at 900°C for 10 hours to prepare 4.1 kg of a raw material silica gel powder. Subsequently, 31 g of this raw material silica gel powder was prefired in a mixed gas circulating atmosphere of 5 mL/min of perfluoroethane and 5 mL/min of oxygen at 900°C for 2 hours and then naturally cooled to prepare 30 g of a fluorine-doped silica gel powder. This fluorine-doped silica gel powder had a fluorine concentration of 0.4% by weight-F. Thereafter, 29 g of the fluorine-doped silica gel powder was heat-treated in a dry air atmosphere at 1,200°C for 1 hour, whereby 29 g of a fluorine-containing silica glass powder was obtained. The thus obtained fluorine-containing silica glass powder had a fluorine concentration of 0.1% by weight-F.

### [Comparative Example D2]

The raw material silica gel powder used in Comparative Example D1, which was in an amount of 31 g, was prefired in a mixed gas circulating atmosphere of 5 mL/min of perfluoroethane and 5 mL/min of oxygen at 700°C for 2 hours and then naturally cooled to prepare 30 g of a fluorine-doped silica gel powder. This fluorine-doped silica gel powder had a fluorine concentration of 0.1% by weight-F. Thereafter, 16 g of the fluorine-doped silica gel powder was heat-treated in a dry air atmosphere at 1,200°C for 1 hour, whereby 15 g of a fluorine-containing silica glass powder was obtained. The thus obtained fluorine-containing silica glass powder had a fluorine concentration of 0.1% by weight-F.

As described above, by bringing a fluorocarbon into contact with a silicon oxide at an appropriate temperature and subsequently annealing and firing the resultant, not only a large amount of fluorine can be incorporated into the resulting silica glass powder but also a reduction in the fluorine concentration caused by dissociation of fluorine from the fluorine-containing silica glass powder can be inhibited, as a result of which an optical fiber can be easily produced.

## Claims

1. A fluorine-containing silica glass powder, comprising particles having a particle size of more than 150 um but 300 µm or less in an amount of 25% by weight or more as a whole.

2. The fluorine-containing silica glass powder according to claim 1, wherein the fluorine content is 0.1% by weight or more.

3. The fluorine-containing silica glass powder according to claim 1 or 2, wherein the content of metal impurities is 1,000 ppm or less.

4. The fluorine-containing silica glass powder according to any one of claims 1 to 3, comprising the particles having a particle size of more than 150 um but 300 um or less in an amount of 50% by weight or more as a whole.

5. The fluorine-containing silica glass powder according to any one of claims 1 to 4, comprising particles having a particle size of more than 425 um in an amount of 1% by weight or less as a whole.

6. The fluorine-containing silica glass powder according to any one of claims 1 to 5, comprising particles having a particle size of 75 um or less in an amount of 1% by weight or less as a whole.

7. A method of producing an optical fiber, the method comprising the step of forming an overcladding using the fluorine-containing silica glass powder according to any one of claims 1 to 6.

8. A method of producing a jacket tube, the method comprising the step of forming a jacket tube using the fluorine-containing silica glass powder according to any one of claims 1 to 6.

9. A method of producing a substrate tube, the method comprising the step of forming a substrate tube using the fluorine-containing silica glass powder according to any one of claims 1 to 6.

10. A method of producing an overcladding tube, the method comprising the step of forming an overcladding tube using the fluorine-containing silica glass powder according to any one of claims 1 to 6.

11. A method of producing a fluorine-containing silica glass powder, the method comprising:
prefiring a silicon oxide at a temperature of lower than 1,000°C in the presence of SiF₄ to prepare a fluorine-containing silica; and
subsequently firing the fluorine-containing silica at a temperature of 1,000°C or higher but lower than 1,400°C to produce a silica glass powder.

12. The method of producing a fluorine-containing silica glass powder according to claim 11, wherein the prefiring in the presence of SiF₄ is performed at 100°C to 800°C.

13. The method of producing a fluorine-containing silica glass powder according to claim 11 or 12, further comprising, after the prefiring, performing annealing at 200°C or higher but lower than 1,000°C.

14. The method of producing a fluorine-containing silica glass powder according to any one of claims 11 to 13, wherein the prefiring comprises: the step of heating the silicon oxide to 200°C to 800°C before introducing SiF₄; and the step of subsequently introducing a SiF₄-containing gas at 100°C to 800°C.

15. The method of producing a fluorine-containing silica glass powder according to any one of claims 11 to 14, wherein a particle size is 1 mm or less.

16. A fluorine-containing silica glass powder, having a fluorine content of 2% by weight or more.

17. A method of producing an optical fiber, the method comprising the step of melting and drawing a fluorine-containing silica glass powder obtained by the method according to any one of claims 11 to 15.

18. A method of producing a jacket tube, the method comprising the step of forming a jacket tube using the fluorine-containing silica glass powder according to any one of claims 11 to 15.

19. A method of producing a substrate tube, the method comprising the step of forming a substrate tube using the fluorine-containing silica glass powder according to any one of claims 11 to 15.

20. A method of producing an overcladding tube, the method comprising the step of forming an overcladding tube using the fluorine-containing silica glass powder according to any one of claims 11 to 15.

21. A method of producing a fluorine-containing silica glass powder, the method comprising:
the first step' of prefiring a silicon oxide at a temperature of 750°C or lower in the presence of an ammonium fluoride to obtain a fluorine-containing silica; and
the second step' of firing the thus obtained fluorine-containing silica at 1,000°C or higher but lower than 1,400°C to obtain a silica glass powder.

22. The method of producing a fluorine-containing silica glass powder according to claim 21, wherein the resulting fluorine-containing silica glass powder has a particle size of 1 mm or less.

23. The method of producing a fluorine-containing silica glass powder according to claim 21 or 22, wherein, in the first step', the silicon oxide and an ammonium fluoride powder are mixed and prefired.

24. The method of producing a fluorine-containing silica glass powder according to any one of claims 21 to 23, wherein the silicon oxide is produced by a sol-gel method.

25. The method of producing a fluorine-containing silica glass powder according to any one of claims 21 to 24, wherein, in the first step', the temperature of the prefiring is 250°C to 750°C.

26. A method of producing an optical fiber, the method comprising the step of melting and drawing a fluorine-containing silica glass powder obtained by the method according to any one of claims 21 to 25.

27. A method of producing a substrate tube, the method comprising the step of forming a substrate tube using a fluorine-containing silica glass powder obtained by the method according to any one of claims 21 to 25.

28. A method of producing an overcladding tube, the method comprising the step of forming an overcladding tube using a fluorine-containing silica glass powder produced by the method according to any one of claims 21 to 25.

29. A method of producing a fluorine-containing silica glass powder, the method comprising:
the first step"' of prefiring a silicon oxide at a temperature of 850°C or lower in the presence of a fluorocarbon to obtain a fluorine-containing silica; and
the second step"' of annealing the thus obtained fluorine-containing silica at a temperature of not higher than a firing temperature and subsequently firing the resultant at 1,000°C or higher to obtain a silica glass powder,
wherein the temperature does not exceed 850°C before the prefiring performed in the presence of a fluorocarbon.

30. The method of producing a fluorine-containing silica glass powder according to claim 29, wherein, in the first step ", the temperature of the prefiring performed in the presence of a fluorocarbon is 700°C or higher.

31. The method of producing a fluorine-containing silica glass powder according to claim 29 or 30, wherein the resulting fluorine-containing silica glass powder has a particle size of 1 mm or less.

32. The method of producing a fluorine-containing silica glass powder according to any one of claims 29 to 31, wherein, in the first step, the fluorocarbon is allowed to exist in the middle of the prefiring.

33. The method of producing a fluorine-containing silica glass powder according to any one of claims 29 to 32, wherein the fluorocarbon is a perfluoro-based fluorocarbon.

34. A method of producing a jacket tube, the method comprising the step of forming a jacket tube using a fluorine-containing silica glass powder produced by the method according to any one of claims 29 to 33.

35. A method of producing a substrate tube, the method comprising the step of forming a substrate tube using a fluorine-containing silica glass powder produced by the method according to any one of claims 29 to 33.

36. A method of producing an overcladding tube, the method comprising the step of forming an overcladding tube using a fluorine-containing silica glass powder produced by the method according to any one of claims 29 to 33.
